# EUROPEAN PATENT SPECIFICATION

(11) **EP 1 390 322 B1**
(45) Date of publication and mention of the grant of the patent: **03.05.2006**
(21) Application number: 02728259.9
(22) Date of filing: 03.05.2002
(51) Int. Cl.: C05G 3/10, B01J 2/30

(54) **AGRICULTURAL COMPOSITION AND CONDITIONING AGENT**
AGRARCHEMISCHE ZUSAMMENSETZUNG UND KONDITIONIERUNGSMITTEL
COMPOSITION AGRICOLE ET AGENT DE CONDITIONNEMENT

(30) Priority: 04.05.2001 NO 20012231
(43) Date of publication of application: 25.02.2004
(73) Proprietor: YARA International ASA, 0202 Oslo (NO)
(72) Inventor: HANSEN, Espen, Fridtjof, N-1356 Bekkestua (NO); WASVIK, Terje, N-3260 Larvik (NO); SNARTLAND, Susanne, Gadman, N-3915 Porsgrunn (NO)
(74) Representative: Wallace, Sheila Jane
(86) International application number: PCT/NO2002/000166
(87) International publication number: WO 2002/090295

(56) References cited:
- EP-A1- 0 320 987
- WO-A1-01/38263
- WO-A1-99/55645
- DD-A3- 274 331
- GB-A- 1 292 718
- GB-A- 1 312 314
- GB-A- 1 479 455
- US-A- 5 603 745
- PATENT ABSTRACTS OF JAPAN & JP 06 024 885 A (KOKURA GOSEI KOGYO KK ET AL.) 01 February 1994

## Description

The present invention relates to a new agricultural composition comprising a substrate being a nitrogen-containing fertiliser and 0.05-1.5 weight% of a coating thereon for reducing dust formation and caking of the fertiliser. The invention further comprises a conditioning agent comprising wax, oil, resin/rosin, surface active agent (surfactant) and possibly a biodegradable polymer for obtaining coating on fertilisers.

It has been known for a long time that particulated fertilisers like NP-fertilisers (complex nitrogen- and phosphorous- fertilisers), NPK (complex nitrogen- and phosphorous- and potassium- fertilisers), AN (ammoniurn nitrate), CAN (calcium ammonium nitrate), urea and nitrogen-containing fertilisers with sulphur will cause problems during storage and handling in bulk if they are not covered by a protective coating.

One problem which arises is the caking of the particulated fertilisers. Fertilisers can be stored as bulk in warehouses for up to nearly one year and handled in bulk in quantities up to 35,000 tonnes in vessels. Thus, such products need a protection to avoid caking before they reach the customer. The economic and environmental consequences of caking taken place during a shipment are enormous.

Also bagged products that are stored in high piles, with increased pressure through the pile have increased tendency to cake. The caking can be caused by different mechanisms depending on the chemistry of the fertiliser. These mechanisms can be: bridge formation, sintering, de-sublimation, crystal modification, deformation, cohesion and/or adsorption. Especially complex fertilisers, like NPK-fertiliser, containing several nutrients have high caking tendency. The demand in the market is turning more and more towards complex systems because the agronomic knowledge is increasing. Specific nutrients, macronutrients and micronutrients are needed for specific crops, it is not sufficient only to add nitrogen and phosphor for yield increase, quality aspects of the crop such as taste is also an increasing factor today. Adding extra nutrients to already complex systems, can result in change of equilibrium of the salt system, creation of solid solutions and increase hygroscopicity. This will result in a higher caking tendency.

Another problem, especially during handling of particulated fertilisers, is dust formation There can be several reasons for this dust formation for instance that the fertiliser particles are uneven. Due to the abrasion the particles are exposed to during handling, this roughness will wear off, and thereby form dust Fertilisers are to an increasing extent transported in bulk, and this results in large mechanical wear on the surface of the fertiliser particles. The mechanical wear may cause formation of refuse, i.e. large pieces are broken off the particles. It is especially the fine dust particles which remain floating in the air for some time, which result in the unpleasant fly dust. The environmental regulation regarding dust formation during loading and unloading requires a solution of the problem.

Several coating agents for different types of fertilisers, as for instance described in European Patents Nos. 320987 and 768993, have been developed for limiting or suppressing the problems mentioned above. The conventional coating agents, however, contain compounds which can be harmful to the environment and involve health risks. The previously known conditioning agents are not sufficiently biodegradable, they may contain carcinogenic polyaromatic hydrocarbons (PAH) and in addition they may be acute toxic towards water organisms.

Thus, it can be expected that in the near future various governments will introduce new legislation restricting the use of agricultural products not being inherently biodegradable, that contain unwholesome polyaromatic hydrocarbons (carcinogenic substances), and are toxic towards water organisms. Few (if any) of the existing conditioning agents applied to fertilisers satisfy the expected allowable degrees of biodegradability, content of PAH and toxicity towards water organisms for agricultural products (EU recommendations).

The acceptable level for inherent biodegradability that could be reasonable to set is above 70% DOC (dissolved organic carbon) within 84 days according to the international EU test method: OECD 302.

The acceptable values for toxicity that could be reasonable to set is below 2 dead animals according to the test for "Toxicity towards Daphnia Magna" (OECD 202 and EU no C.2.), corresponding to a LC50 (lethal concentration of 50% of the animals) of 100 ppm. If the test results give values between 2-10, it is recommended to perform tests on fish and algae in addition, in order to verify if there is a real water toxicity or not. These tests are also stated in the "OECD Guidelines for Testing of Chemicals" (OECD 203 and OECD 201).

The acceptable values for PAH that could be reasonable for a coating is below 1.5% at the I.P.346 analyse method. This limit is based on a normal maximal concentration for protective coatings. If the test results show values above 1.5%, identification of the actual organic components is necessary, in order to see whether they are carcinogenic, mutagenic or influence the reprotoxic nature or not.

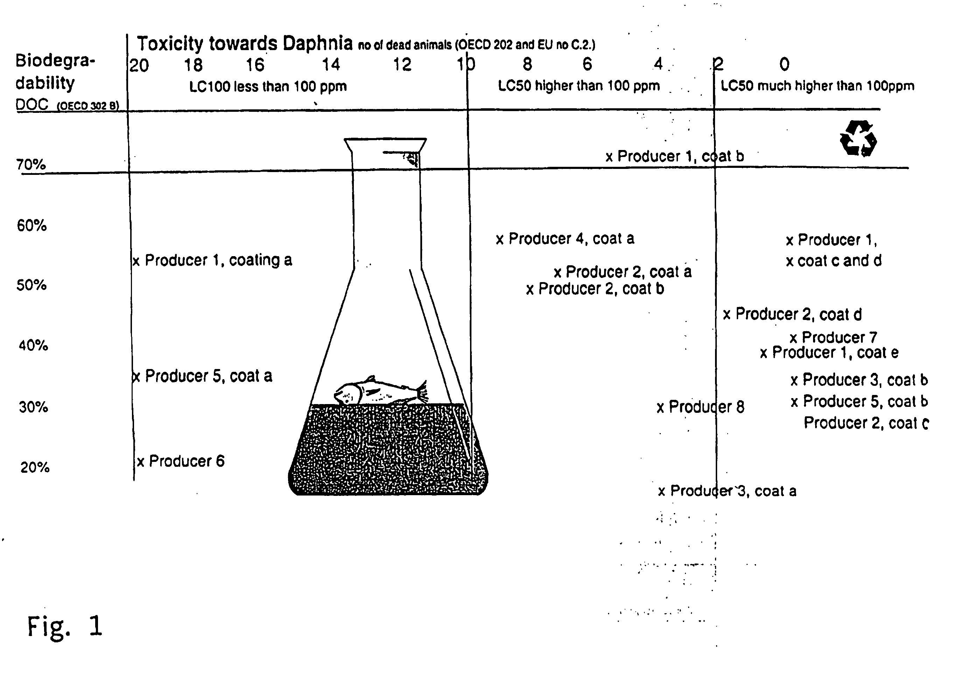

As can be seen in Figure 1, none of the tested existing fertiliser coatings do satisfy both the expected demands set for biodegradability and toxicity. Figure 1 is showing test results for several coatings from 8 different producers in Europe. Eight of the tested coatings are furthermore not satisfying the expected demands for content of PAH.

Dust reducing components used in coatings are very often synthetic polymers with low biodegradability, and also the carrier like technical white oil, has low biodegradability because of their chemical nature (paraphenic and naphtenic substances).

Furthermore, oils and waxes used in conventional coatings can contain polyaromatic hydrocarbons (PAH). Of course not all PAH can cause hazard assessment, but it is important to identify the specific substance to verify if it is carcinogenic or not.

The main object of the present invention is to provide an agricultural composition comprising nitrogen-containing tertillsers having reduced tendency for caking and dust formation during handling and storage as well as being biodegradable and non-toxic for the environment.

Another object of the present Invention Is to provide a conditioning agent being biodegradable and non-toxic for the environment.

A further object of the present invention is to provide a conditioning agent being applicable in relatively large amounts without making the fertiliser particles sticky and thereby reduce their spreadability.

Still another object of the present invention is to provide a conditioning agent being flexible within the actual operating temperatures and being applicable to fertiliser particles by conventional coating or conditioning equipment.

The Inventors found that the problems mentioned above could be solved by applying a new conditioning agent for coating fertillisers, The conditioning agent satisfies the above mentioned demands for biodegradability, water toxicity and content of PAH as well as reduces caking and dust formation of the fertiliser and Increases sproadability of the fertiliser.

According to the present invention there is provided an agricultural composition comprising a substrate being a nitrogen-containtng fertiliser and 0.05-1.5 weight% of a coating comprlslng wax, oil, resin and a surface active agent and possibly a polymer,
**characterized in that**
the coating contains 5-50 weight% wax, 5-75 weight% oil comprising vegetable oils, animal oils, marine oils or preparations of these, 0-60 weight% resin being an unsaturated animal oil, fish oil or vegetable oil distillation residue or natural occurring resin, 2-15 weight% surface active agent and 0-5 weight% of a biodegradable polymer.

According to another aspect of the present invention there is provided a conditioning agent for reducing dust formation and caking of fertilisers, comprising wax, oil, resin, a surface active agent and possibly a polymer,
**characterized in that**
it comprises 5-50 weight% wax, 5-75 weight% oil comprising vegetable oils, animal oils, marine oils or preparations of these, 0-60 weight% resin being an unsaturated animal oil, fish oil or vegetable oil distillation residue or natural occurring resin, 2-15 weight% surface active agent and 0-5 weight% of a biodegradable polymer.

The conditioning agent according to the present invention comprises oil, wax and resin. In addition the conditioning agent comprises a surface active agent (surfactant) that can be a sulfonate, phosphate ester, glutinate, sulphate, ethoxylated amide and other anionic and cationic organic substances. Furthermore, it may comprise a biodegradable polymer for the purpose of further increasing the dust reducing effect of the coating.

The oil comprises all kinds of natural occurring oils like vegetable oils, animal oils and marine oils or products made from these.

Vegetable oils can be corn oil, canola oil, sunflower oil, soya oil, linseed oil, rapseed oil, palm oil or mixtures thereof.

A preferred oil composition is a refined fish oil or partially hydrogenated refined oil.

Useful types of wax in the new conditioning agent are:

Intermediary waxes, paraffin waxes, microcrystalline waxes, carnuba wax, marine wax and vegetable waxes. Mixtures of two or more of these waxes will be an actual wax component.

Paraffin waxes can be defined as predominantly straight-chain saturated hydrocarbons with smaller proportions of branched-chain and cycloparaffinic compounds.

Intermediary waxes are mixtures of straight-chain, branched-chain and cycloparaffinic compounds, intermediate in character between those of paraffin and microcrystalline waxes.

Microcrystalline waxes are hydrocarbons of higher average molecular weight than those of paraffin waxes with a wider range of components containing a high portion of branched-chain and cycloparaffinic hydrocarbons.

In order to obtain a lowest possible congealing point, intermediary waxes are preferred. These will give congealing point of about 37°C compared to congealing point of about 43°C for a mixture of paraffinic and microcrystalline wax.

The resin used in the new conditioning agent is unsaturated animal oil, fish oil or vegetable oil distillation residue or a natural occurring resin.

A preferred resin according to this invention is a fish oil distillation residue.

The surface active agent (surfactant) used in the new conditioning agent is preferably alkylarylsulphonate. When the new conditioning agent comprising a fish oil distillation residue is applied to fertilisers, the fish oil distillation residue acts like a surfactant for the fertiliser. However, for fertilisers having high caking tendency, like some NKP-fertilisers, it is necessary to add an addittonal surface active agent to avoid caking. The concentration of such a component, will depend on its nature and is in the interval of 2-15%. The applied surfactant is an anionic, neutral component, that will not induce fertiliser degradation.

The negative effect of a caking is because of the present invention reduced dramatically.

In order to reduce the dust formation even more, a biodegradable polymer like polyisobutylene could be added to the conditioning agent.

The fertilisers according to the present invention are particulated fertilisers like NPK (complex nitrogen-, phosphorous- and potassium fertiliser), NK (nitrogen-and potassium type fertiliser), NP (nitrogen- and phosphorous fertiliser), AN (ammonium nitrate), urea, nitrogen fertilisers with sulphur and CAN (calcium ammonium nitrate).

It was found that the relative amounts in weight% of the components of the conditioning agent should be:

| | |
|---|---|
| Wax : | 5 - 50, preferably 10-40 |
| Oil : | 5 - 75, preferably 15-40 |
| Resin : | 0 - 60, preferably 30-55 |
| Polymer : | 0 - 5, preferably 1-4 |
| Surfactant: | 2 - 15, preferably 5-10 |

The scope of the invention, and its special features are as defined by the attached claims.

The invention is further explained and envisaged in the examples and the figures:
- Fig. 1: shows values for biodegradability and toxicity for 16 conventional fertiliser coatings from 8 different producers in Europe. PAH is below 1.5% in 8 of the tested 16 coatings.
- Fig. 2: shows that by increasing the concentration of the surfactant the caking tendency for prilled NPK will be reduced.
- Fig. 3: shows the effect of increasing the concentration of the surfactant for granulated CAN stabilised with Mg(NO₃)₂.
- Fig. 4: shows the effect of increasing the concentration of the surfactant for CAN stabilised with Al₂(SO₄)₃-
- Fig. 5: shows values for biodegradability and toxicity for a conditioning agent (coating) according to the present invention compared to conventional coatings.

### Example 1

Prilled NPK is tested with addition of 0.13% of coating + 0.35% of conditioning powder (talc). The caking index is measured after exposure for 60% RH (relative humidity) at + 25°C and pressure for 24 hours.

In order to get more reliable results from optimisation of a recepi, a statistic experimental design named "Modde" is used. 72% of the variation in the results can be explained by the model, which gives reliable test result.

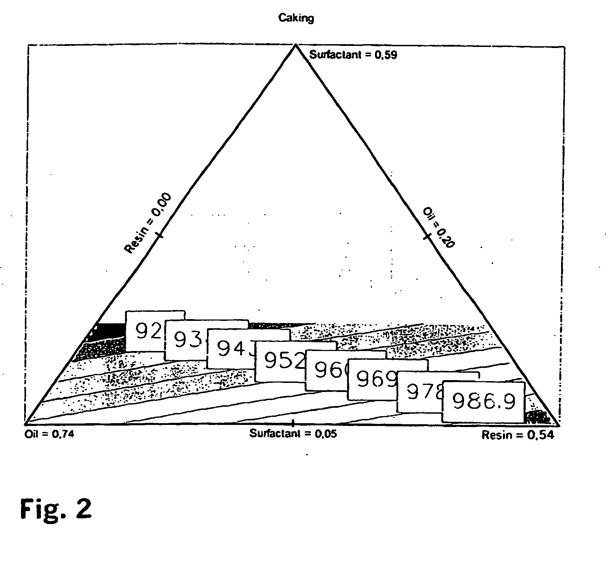

Figure 2 shows that by increasing the concentration of the surfactant the caking tendency will be reduced. The limits for the concentration of the components is set with respect to production limits such as fertiliser surface and temperature coating temperature and acceptable congealing point for the coaling. The figures in the triangle are caking indexes, and the concentration of the components are on the axes.

In this example the concentration of surfactant is listed from 5 to 59% across the triangle. The resin is from 0% to 54% and the oil from 20 to 74% of the total composition. To be in the upper left part of the figure gives the lowest caking. That is to have high surfactant concentration, low resin concentration and more independent of the oil concentration. The oil is a carrier.

### Example 2

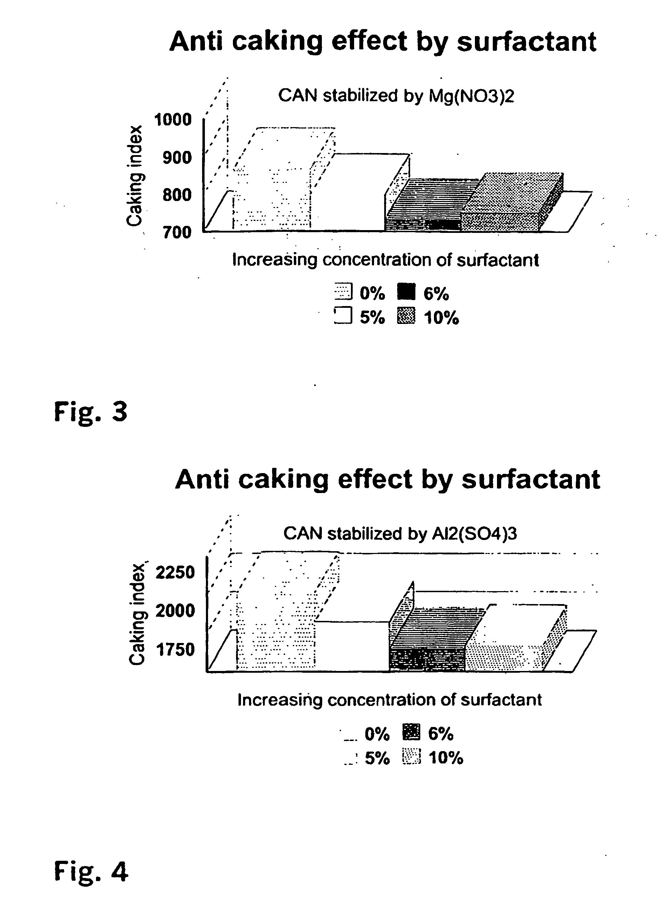

Granulated CAN stabilised with Mg(NO₃)₂ is added 0.05% of a coating with different concentration of alkylarylsulphonate. The result from caking tests (measured as caking index) at 60% RH + 25°C for 24 hours under pressure is visualised in Figure 3.

Figure 3 shows the effect of increasing the concentration of the surfactant, but only to a certain level. The coating called "0%" is the coating described in Norwegian Patent Application No. 19995833. In this example, CAN stabilised with Mg(NO₃)₂. no extra benefit will be achieved by increasing the concentration above 10% in the coating formulation.

### Example 3

CAN stabilised with Al₂(SO₄)₃ is added 0.05% of a coating with different concentration of alkylarylsulphonate. The result from caking, tests (measured as caking index) at 60% RH at + 25°C for 24 hours under pressure is visualised in Figure 4.

Figure 4 shows the effect of increasing the concentration of the surfactant, but only to a certain level. The coating called "0%" is the coating described in Norwegian Patent Application No. 19995833.

in this example, CAN stabilised with Al₂(SO₄)₃, no extra benefit will be achieved by increasing the concentration above 10%.

### Example 4

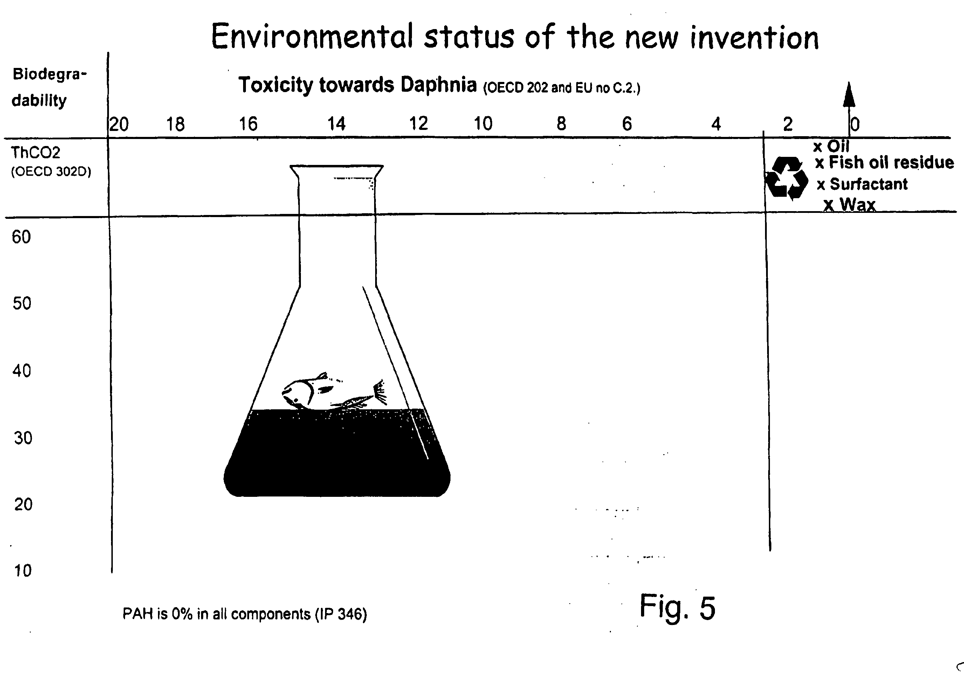

The invented coating with composition as mentioned in Examples 1, 2 and 3 has been tested for biodegradability in accordance with OECD 302, toxicity towards water organisms in accordance with OECD 202, EU no.C2 (Daphnia Magna) and concentrations of PAH in accordance with method IP 346. The coating according to the present invention has passed all the test limits stated earlier in this specification as shown in Figure 5. None of the other 16 tested coatings on the market today pass all three criteria at the same time as shown in Figure 1.

The results from the measurement of dust is visualised in Table 1. Table 1 shows that by adding polyisobutylene to the coating the dust formation is further reduced.

In this test the figures are expressed in PQR-scores = product quality rating-scores. The optimal value is 100, which indicate "extremely good".

The highest quality score is obtained by use of the present invention with polymer added.

it can also be seen that the same quality can be obtained by addition of a lower concentration of the coating with polymer than a coating without the polymer.

**Table 1. Concentrations of coating, for the present invention with and without polymer in relation to dust potential expressed as PQR-score**

| | **Invention without polymer** | **Invention with polymer** |
|---|---|---|
| | **Coating %** | **Coating %** |
| **PQR 90** | | 0.14 |
| **PQR 80** | 0.13 | 0.12 |
| **PQR 70** | 0.15 | 0.14 |
| **PQR 60** | 0.15 | 0.11 |

In addition the separated components of the invented coating have been tested by gas chromatograhpy and mass selective detection (GC/MS) where the aromatic components are specified and quantified down to ppm concentrations. None of the identified aromats are classified as carcinogenic (in accordance with "Stortingsmolding" 58).

This invention shows that it is possible to use components in coatings which have a good environmental profile, with high efficiency as a coating on fertilisers with high caking tendency and dust potential and being economically feasible at the same time.

By the present invention the inventors have succeeded in arriving at a nitrogen-containing fertiliser that can be handled, stored and applied without giving problems with regard to caking of the particles and dust formation during handling.

The new coating agent achieved is easy to apply during the coating of the fertiliser particles. The resulting coating on the particles makes them free-flowing and non-sticky, which is favourable with regard to spreadabihty.

The coating according to the invention satisfies expected restrictions concerning biodegradability, toxicity towards the environment and PAH-content. None of the existing coatings today do satisfy all these restrictions at the same time.

## Claims

1. An agricultural composition comprising a substrate being a nitrogen-containing fertiliser and 0.05-1.5 weight% of a coating comprising wax, oil, resin and a surface active agent and possibly a polymer,
**characterized in that**
the coating contains 5-50 weight% wax, 5-75 weight% oil comprising vegetable oils, animal oils, marine oils or preparations of these, 0-60 weight% resin being an unsaturated animal oil, fish oil or vegetable oil distillation residue or natural occurring resin, 2-15 weight% surface active agent and 0-5 weight% of a biodegradable polymer.

2. Agricultural composition according to claim 1,
**characterized in that**
the substrate is NP-, NK- or NPK-fertilisers, AN or nitrogen fertilisers with sulphur, urea or CAN and that the coating contains 10-40 weight% wax, 15-40 weight% oil, 30-55 weight% resin, 5-10 weight% surface active agent and 1-4 weight% polymer.

3. Agricultural composition according to claim 1 or 2,
**characterized in that**
the oil component of the coating comprises refined fish oil or partially hydrogenated refined oil.

4. Agricultural composition according to any one of the preceding claims,
**characterized in that**
the resin component of the coating comprises fish oil distillation residue.

5. Agricultural composition according to any one of the preceding claims,
**characterized in that**
the wax component of the coating comprises intermediary wax.

6. Agricultural composition according to any one of the preceding claims,
**characterized in that**
the polymer component of the coating comprises polyisobutylene.

7. Agricultural composition according to any one of the preceding claims,
**characterized in that**
the surface active agent of the coating comprises alkylaryisulphonate, phosphates, glutinates or, other anionic and/or cationic surface active agents.

8. Conditioning agent for reducing dust formation and caking of fertilisers, comprising wax, oil, resin, a surface active agent and possibly a polymer,
**characterized in that**
it comprises 5-50 weight% wax, 5-75 weight % oil comprising vegetable oils, animal oils, marine oils or preparations of these. 0-60 weight% resin being an unsaturated animal oil, fish oil or vegetable oil distillation residue or natural occurring resin, 2-15 weight% surface active agent and 0-5 weight% of a biodegradable polymer.

9. Conditioning agent according to claim 8.
**characterized in that**
it comprises 10-40 weight% wax, 15-40 weight% oil, 30-55 weight% resin, 5-10 weight% surface active agent and 1-4 weight% biodegradable polymer.

10. Conditioning agent according to claim 8 or 9,
**characterized in that**
the wax component comprises intermediary waxes, the oil component comprises vegetable oils, animal oils, marine oils, or preparations of these and/or refined fish oil or partially hydrogenated refined oil, the resin component comprises residue from fish, animal or vegetable oil production and/or naturally occurring resins, the surfactant component comprises alkylarylsulphonate, glutinates or phosphate esters and/or naturally occurring surface active agents and the polymer component comprises polyisobutylene.

## Patentansprüche

1. Landwirtschaftliche Zusammensetzung, umfassend ein Substrat, wobei es sich um ein stickstoffhaltiges Düngemittel handelt, und 0,05 bis 1,5 Gew.% einer Beschichtung umfassend Wachs, Öl, Harz und ein Tensid und möglicherweise ein Polymer, **dadurch gekennzeichnet**, däß die Beschichtung 5 bis 50 Gew.% Wachs, 5 bis 75 Gew.% Öl, umfassend pflanzliche Öle, tierische Öle, marine öle oder Präparationen derselben, 0 bis 60 Gew.% Harz, wobei es sich um einen ungesättigten tierisches Öl-, Fischöl- oder pflanzliches Öl-Destillationsrest oder ein natürlich auftretendes Harz handelt, 2 bis 15 Gew.% Tensid und 0 bis 5 Gew.% bioabbaubares Polymer enthält.

2. Landwirtschaftliche Zusammensetzung gemäß Anspruch 1, **dadurch gekennzeichnet, daß** das Substrat NP-, NK- oder NPK-Düngemittel ist, AN oder Stickstoffdüngemitte.l mit Schwefel, Harnstoff oder CAN, und daß die Beschichtung 10 bis 40 Gew.% Wachs, 15 bis 40 Gew.% Öl, 30 bis 55 Gew.% Harz, 5 bis 10 Gew.% Tensid und 1 bis 4 Gew.% Polymer enthält.

3. Landwirtschaftliche Zusammensetzung gemäß Anspruch 1 oder 2, **dadurch gekennzeichnet, daß** die Ölkomponente der Beschichtung raffiniertes Fischöl oder teilweise hydriertes raffiniertes Öl enthält.

4. Landwirtschaftliche Zusammensetzung gemäß einem der vorstehenden Ansprüche, **dadurch gekennzeichnet, daß** die Harzkomponente der Beschichtung einen Fischöl-Destillationsrest umfaßt.

5. Landwirtschaftliche Zusammensetzung gemäß einem der vorstehenden Ansprüche, **dadurch gekennzeichnet, daß** die Wachskomponente der Beschichtung intermediäres Wachs umfaßt.

6. Landwirtschaftliche Zusammensetzung gemäß einem der vorstehenden Ansprüche, **dadurch gekennzeichnet, daß** die Polymerkomponente der Beschichtung Polyisobutylen umfaßt.

7. Landwirtschaftliche Zusammensetzung gemäß einem der vorstehenden Ansprüche, **dadurch gekennzeichnet, daß** das Tensid der Beschichtung Alkylarylsulfonat, Phosphate, Glutinate oder andere anionische und/oder kationische Tenside umfaßt.

8. Konditionierungsmittel für die Reduktion einer Staubbildung und eines Verbackens von Düngemitteln, umfassend Wachs, Öl, Harz, ein Tensid und möglicherweise ein Polymer, **dadurch gekennzeichnet, daß** es 5 bis 50 Gew.% Wachs, 5 bis 75 Gew.% Öl, umfassend pflanzliche Öle, tierische Öle, marine Öle oder Präparationen derselben, 0 bis 60 Gew.% Harz, wobei es sich um einen ungesättigten tierisches Öl-, Fischöl- oder pflanzliches Öl-Destillationsrest oder ein natürlich auftretendes Harz handelt, 2 bis 15 Gew.% Tensid und 0 bis 5 Gew.% bioabbaubares Polymer umfaßt.

9. Konditionierungsmittel gemäß Anspruch 8, **dadurch gekennzeichnet, daß** es 10 bis 40 Gew.% Wachs, 15 bis 40 Gew.% Öl, 30 bis 55 Gew.% Harz, 5 bis 10 Gew.% Tensid und 1 bis 4 Gew.% bioabbaubares Polymer umfaßt.

10. Konditionierungsmittel gemäß Anspruch 8 oder 9, **dadurch gekennzeichnet, daß** die Wachskomponente intermediäre Wachse umfaßt, die Ölkomponente pflanzliche Öle, tierische Öle, marine Öle oder Präparationen derselben und/oder raffiniertes Fischöl oder teilweise hydriertes raffiniertes Öl umfaßt, die Harzkomponente Reste von Fisch, tierischer oder pflanzlicher Ölproduktion und/oder natürlich auftretende Harze umfaßt, die Tensidkomponente Alkylarylsulfonat, Glutinate oder Phosphatester umfaßt und/oder natürlich auftretende Tenside und die Polymerkomponente Polyisobutylen umfaßt.

## Revendications

1. Composition agricole comprenant un substrat qui est un engrais azoté et 0,05 à 1,5 % en poids d'un enrobage comprenant une cire, une huile, une résine, et un agent tensioactif et éventuellement un polymère, **caractérisé en ce que** l'enrobage contient de 5 à 50% en poids de cire, de 5 à 75% en poids d'huile, comprenant les huiles végétales, les huiles animales, les huiles marines ou des préparations à base de celles-ci, de 0 à 60% en poids de résine étant constituée d'un résidu de distillation d'une huile animale insaturée, une huile de poisson ou une huile végétale ou une résine naturelle, de 2 à 15 % en poids d'un agent tensioactif et de 0 à 5% en poids d'un polymère biodégradable.

2. Composition agricole selon la revendication 1, **caractérisée en ce que** le substrat est un engrais de type NP, NK ou NPK, un engrais AN ou azoté contenant du soufre, de l'urée ou du CAN et **en ce que** l'enrobage contient de 10 à 40% en poids de cire, de 15 à 40% en poids d'huile, de 30 à 55% en poids de résine, de 5 à 10 % en poids d'un agent tensioactif et de 1 à 4% en poids d'un polymère.

3. Composition agricole selon la revendication 1 ou la revendication 2, **caractérisée en ce que** l'huile entrant dans la composition de l'enrobage comprend l'huile de poisson transformée ou l'huile transformée partiellement hydrogénée.

4. Composition agricole selon l'une quelconque des revendications précédentes, **caractérisée en ce que** la résine entrant dans la composition de l'enrobage comprend un résidu de distillation d'une huile de poisson.

5. Composition agricole selon l'une quelconque des revendications précédentes, **caractérisée en ce que** la cire entrant dans la composition de l'enrobage comprend une cire intermédiaire.

6. Composition agricole selon l'une quelconque des revendications précédentes, **caractérisée en ce que** le polymère entrant dans la composition de l'enrobage comprend du polyisobutylène.

7. Composition agricole selon l'une quelconque des revendications précédentes, **caractérisée en ce que** l'agent tensioactif de l'enrobage comprend un alkylarylsulphonate, des phosphates, des glutinates ou d'autres agents tensioactifs anioniques et/ou cationiques.

8. Produit de conditionnement destiné à réduire la formation de poussière et l'agglutination des engrais, comprenant une cire, une huile, une résine, un agent tensioactif et éventuellement un polymère, **caractérisé en ce qu'**il contient de 5 à 50% en poids de cire, de 5 à 75% en poids d'huile, comprenant les huiles végétales, les huiles animales, les huiles marines ou des préparations à base de celles-ci, de 0 à 60% en poids de résine étant constitué d'un résidu de distillation d'une huile animale insaturée, une huile de poisson ou une huile végétale ou une résine naturelle, de 2 à 15 % en poids d'un agent tensioactif et de 0 à 5% en poids d'un polymère biodégradable.

9. Produit de conditionnement selon la revendication 8, **caractérisé en ce qu'**il contient de 10 à 40% en poids de cire, de 15 à 40% en poids d'huile, de 30 à 55% en poids de résine, de 5 à 10 % en poids d'un agent tensioactif et de 1 à 4% en poids d'un polymère biodégradable.

10. Produit de conditionnement selon la revendication 8 ou 9, **caractérisé en ce que** la cire entrant dans la composition comprend des cires intermédiaires, l'huile entrant dans la composition comprend des huiles végétales, des huiles animales, des huiles marines, ou des préparations de ceux-ci et/ou une huile raffinée de poisson ou une huile raffinée partiellement hydrogénée, la résine entrant dans la composition comprend un résidu à partir d'huiles de poissons, animales ou végétales de production et/ou de résines naturelles, l'agent tensioactif entrant dans la composition comprend des alkylarylsulfonates, des glutinates ou des esters de phosphate et/ou des agents tensioactifs naturels et un polymère entrant dans la composition comprend du polyisobutylène.
